(19) Europäisches Patentamt / European Patent Office / Office européen des brevets

(11) **EP 2 369 369 B1**

(12) **FASCICULE DE BREVET EUROPEEN**

(45) Date de publication et mention
de la délivrance du brevet:
**24.10.2012 Bulletin 2012/43**

(51) Int Cl.:
***G01V 11/00*** *(2006.01)*

(21) Numéro de dépôt: **11290103.8**

(22) Date de dépôt: **25.02.2011**

(54) **Procédé de surveillance d'un site de stockage géologique de gaz par inversion stratigraphique de données sismiques**

Methode zur Überwachung eines geologischen Gasreservoirs durch stratigraphische Inversion seismischer Daten

Method of surveying a geologic gas reservoir by employing stratigraphic inversion on seismic data

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2010 FR 1001042**

(43) Date de publication de la demande:
**28.09.2011 Bulletin 2011/39**

(73) Titulaire: **IFP Energies nouvelles
92852 Rueil-Malmaison Cedex (FR)**

(72) Inventeurs:
• **Leger, Michel
92500 Rueil-Malmaison cedex
(FR)**
• **Clochard, Vincent
78500 Sartrouville (FR)**

(56) Documents cités:
FR-A1- 2 765 692    FR-A1- 2 800 473
FR-A1- 2 873 823    FR-A1- 2 933 499

• **CHADWICK A ET AL: "Quantitative analysis of time-lapse seismic monitoring data at the Sleipner CO2 storage operation", THE LEADING EDGE, SOCIETY OF EXPLORATION GEOPHYSICISTS, US LNKD- DOI: 10.1190/1.3304820, vol. 29, no. 2, 1 février 2010 (2010-02-01), pages 170-172,174, XP001551083, ISSN: 1070-485X**
• **CHADWICK R A ET AL: "Latest time-lapse seismic data from Sleipner yield new insights into CO2 plume development", ENERGY PROCEDIA, ELSEVIER LNKD- DOI:10.1016/J.EGYPRO. 2009.01.274, vol. 1, no. 1, 1 février 2009 (2009-02-01), pages 2103-2110, XP026472121, ISSN: 1876-6102 [extrait le 2009-02-01]**

EP 2 369 369 B1

**Description**

L'invention concerne le domaine de l'exploitation d'un milieu souterrain. En particulier, l'invention concerne un procédé de surveillance d'une formation souterraine dans laquelle, soit on injecte un gaz, dans le cadre d'une surveillance d'un site de stockage géologique de gaz par exemple, soit on extrait un gaz de la formation souterraine, dans le cadre de production d'hydrocarbures par exemple.

La surveillance responsable et efficace d'un stockage souterrain de gaz, par exemple de gaz carbonique après capture, exige une bonne connaissance de la répartition spatiale du gaz, et plus encore, de l'évolution de cette répartition au cours du temps. Forer des puits est un bon moyen de savoir ce qu'il y a dans le sous-sol, mais d'une part c'est coûteux, et d'autre part la question de savoir ce qui se passe entre les puits reste entière. L'imagerie sismique, quant à elle, donne des informations réparties sur l'ensemble de la zone tridimensionnelle explorée, même si sa résolution spatiale est limitée. La prospection sismique consiste à envoyer des ondes dans le sous-sol à partir de différents points de tir, et, à l'aide de nombreux récepteurs, à en enregistrer les échos renvoyés par les limites entre les couches géologiques.

Si on injecte du gaz dans un réservoir, alors son impédance acoustique, c'est-à-dire le produit de la vitesse du son par la masse volumique, diminue et les échos sont modifiés. Toutes les impédances sont exprimées en (m/s). (g/cm$^3$) dans la description. Que ce stockage de gaz soit temporaire, pour le gaz naturel, ou définitif, pour le dioxyde de carbone, l'imagerie sismique est donc candidate pour suivre le devenir du gaz, qu'il s'agisse d'étalement dans le réservoir, de transformation chimique, où même éventuellement de fuite vers la surface.

La prospection sismique peut se pratiquer presque partout sur Terre, aussi bien à terre qu'en mer. Historiquement, l'acquisition des données sismiques a pendant longtemps été opérée le long de profils 2D plus ou moins rectilignes. Aujourd'hui, les acquisitions 3D sont largement majoritaires et permettent l'imagerie tridimensionnelle du sous-sol à des profondeurs de plus en plus grandes : d'importants gisements d'hydrocarbures on été récemment découverts au delà de 5 km et jusqu'à 7 km.

À terre, la source des ondes sismiques peut être un explosif enterré dans un forage de quelques mètres ou décamètres, mais plus fréquemment un *vibrateur,* un lourd camion muni en dessous d'une solide plaque métallique, relevée pour permettre le déplacement de l'engin, mais sur laquelle il se soulève et appuie de tout son poids au moment d'émettre. Des vérins font alors osciller le camion sur sa plaque, ce qui envoie des ondes dans le sol. À la différence de l'explosif, le vibrateur ne peut pas envoyer de courtes impulsions, la brièveté de l'onde conditionnant la résolution des images qui en découlent. Confronté au même problème que le radar : *il n'est pas possible d'émettre un signal à la fois très bref et très énergique,* le vibrateur le résout selon le même principe en émettant un signal modulé en fréquence, dont la durée, de l'ordre de la minute pour le vibrateur, permet l'envoi d'une onde de grande énergie. Pour récupérer la brièveté de l'onde, le train d'ondes émis est conçu pour que son autocorrélation soit la plus brève possible, et l'intercorrélation des enregistrements sismiques avec le train d'ondes émis fournit des enregistrements proches de ceux qu'auraient donné une source impulsionnelle. Variable en fonction de la profondeur de l'objectif et de la nature du sous-sol, la bande de fréquence des signaux émis est en gros comprise entre 10 et 100 Hz. Les échos renvoyés par les discontinuités de propriétés mécaniques des terrains sont transformés en signaux électriques par des milliers de capteurs appelés *géophones,* qui sont répartis autour de la source sur quelques hectomètres à quelques kilomètres. Ces enregistrements sont ensuite acheminés par radio à un camion appelé labo où ils sont transférés sur disque dur.

En mer, un bateau tire plusieurs groupes de *canons à air* immergés à quelques mètres de profondeur. Ces groupes sont déportés par des dispositifs hydrodynamiques en dehors de la trajectoire du bateau, ce qui permet de les aligner en travers de cette trajectoire. Chaque groupe de canons fonctionne à tour de rôle, à raison d'un tir toutes les cinq à dix secondes. De plus, le bateau tire plusieurs *flûtes* de quelques kilomètres de longueur, parallèles à la trajectoire du bateau et disposées à intervalles réguliers. Ce bateau peut aussi recevoir l'assistance de deux autres bateaux, un de chaque côté, pour des acquisitions dites *large azimut,* par exemple pour mieux voir sous des dômes de sel du Golfe du Mexique. Trainées à quelques mètres de profondeur, ces flûtes sont des tuyaux en plastique de quelques centimètres de diamètre contenant un câble métallique pour la résistance à la traction, des capteurs de pression appelés *hydrophones* qui transforment les ondes en signaux électriques, des fils électriques qui transmettent ces signaux au bateau, et un liquide de remplissage de densité choisie pour que la flûte ne flotte ni ne coule. Pour contrecarrer l'effet des courants marins, un système acoustique mesure en permanence les défauts de la géométrie du dispositif et pilote des déflecteurs qui les corrigent.

Après acquisition, les données sont traitées pour former des images du sous-sol. À chaque enregistrement correspond un segment qui relie le point-source au point-récepteur, et dont le milieu s'appelle *point-milieu* et la longueur le *déport.* On définit en carte un quadrillage de la zone étudiée et on regroupe les enregistrements en collections dont les point-milieux ont en commun d'être dans le même carreau du quadrillage. Les enregistrements individuels étant souvent entachés de bruit, on les additionne avec l'idée que le signal va croitre en n, le nombre de signaux sommés, et le bruit en racine de n, ce qui améliore ie rapport signal sur bruit. Une *analyse des vitesses* détermine les *corrections dynamiques* qui vont compenser le surcroit de trajet parcouru par les ondes dont les points d'émission et de réception sont éloignés. Après l'application de ces corrections dynamiques, intervient la sommation en *couverture multiple.* Bien que les hypothèses simplistes de la couverture multiple soient parfois grossièrement en défaut (*piémonts, dômes de sel*), elle est systématiquement réalisée. La couverture multiple fournit des images par l'artifice suivant : on attache à chaque point-milieu l'enregistrement sommé qui lui correspond, l'axe des temps étant orienté vers le bas. L'inconvénient de cette image est qu'elle n'est pas géométriquement correcte : alors qu'elles sont en fait identiques, les épaisseurs de deux couches peuvent sembler distinctes parce que leurs vitesses sont différentes. De plus, si les couches sont inclinées, le point où a eu lieu la réflexion est arbitrairement mis à la verticale du point-milieu, ce qui n'a pas lieu d'être. Pour remédier à ces inconvénients, on utilise une méthode de traitement appelée *migration* dont il existe de nombreuses variantes. Les *migrations temps* conservent le temps comme coordonnée verticale, à la différence des *migrations profondeur.* Lorsque la propagation des ondes est compliquée, les hypothèses de la couverture multiple ne tiennent pas et on préfère la migration *avant sommation* à la migration *après sommation.* Toutes les migrations requièrent la connaissance du champ de vitesse, mais cette exigence est critique pour la migration profondeur.

L'*inversion stratigraphique* permet de mieux connaitre le réservoir, il s'agit de transformer l'image sismique, où les réflexions indiquent des contrastes d'impédance, en une carte tridimensionnelle de l'impédance acoustique elle-même qui donne des renseignements précieux sur la nature des roches. L'inversion stratigraphique comporte trois étapes. La première est le calage puits-sismique, dont le but est d'identifier le train d'ondes, appelé *ondelette,* qui s'est propagé dans le sous-sol. Pour cela, on calcule la diagraphie d'impédance à partir des *diagraphies sonique* (vitesse du son) et de densité, et on lui applique un filtre passe-bas pour l'amener dans la bande des fréquences sismiques. De cette diagraphie d'impédance on déduit la suite des coefficients de réflexion, et finalement l'ondelette par comparaison avec la sismique (couverture multiple, souvent migrée en temps) au niveau du puits. La deuxième étape est la construction du modèle a priori, dont le but est de pallier le manque de très basses fréquences dans la sismique. Pour cela, des *horizons pointés* sur la sismique déterminent plusieurs unités sur lesquelles on définit des *feuilletages* dont les *feuilles* sont les *isochrones* de *dépôt.* Chaque feuilletage permet l'interpolation des impédances connues aux puits en tout point l'unité correspondante. Pour chaque unité, le feuilletage est défini selon trois options : parallèle à l'horizon supérieur, à l'horizon inférieur, ou concordant. Il arrive que l'on utilise les analyses des vitesses pour pallier le manque de puits, mais il faut alors se donner des valeurs de masse volumique. La troisième étape est l'inversion proprement dite, qui consiste à trouver le champ d'impédance qui minimise la somme de deux fonctionnelles. La première, dite fonctionnelle sismique, mesure l'écart en norme $L^2$ entre la sismique calculée sur l'impédance courante et la sismique observée. La seconde, dite fonctionnelle géologique, mesure l'écart entre l'impédance courante et l'impédance a priori. Cette fonctionnelle géologique se décompose en deux termes, une norme $L^2$ sur la différence des impédances calculée et a priori, et une norme $L^2$ sur le gradient de cette différence après projection de ce gradient sur le plan tangent à la feuille locale du feuilletage. L'équation (1) explicite cette fonctionnelle,

$$F(I) = p_1 \|w * R(I) - S_0\|_{L2} + p_2 \|I - I_0\|_{L2} + p_3 \|P_T(\nabla(I - I_0))\|_{L2}, \qquad (1)$$

où I désigne le champ d'impédance, $p_1$ le poids de la fonctionnelle sismique qui dépend du rapport bruit sur signal, w l'ondelette estimée au calage puits-sismique, $R(I)$ le champ des coefficients de réflexion calculé sur le champ d'impédance I, * la convolution, $S_0$ la sismique observée, $p_2$ le poids du sous-terme $L_2$ sur l'écart à l'impédance a priori $I_0$, et $p_3$ le poids du sous-terme $L_2$ sur le gradient de l'écart à l'impédance a priori. Remarquons que, le modèle a priori étant généralement lisse, un terme de gradient dans la fonctionnelle aurait tendance à lisser le résultat, ce qui n'est pas souhaitable car la résolution verticale est précieuse, et c'est la raison pour laquelle le gradient est projeté ($P_T$ dans l'équation (1)) sur le plan tangent à la feuille locale du feuilletage sédimentaire. Cette fonctionnelle globale est minimisée par gradient conjugué. Cette inversion stratigraphique a été brevetée (FR2765692).

Une première variante de l'inversion stratigraphique est l'inversion stratigraphique avant sommation. La donnée n'est plus l'unique couverture multiple, mais un ensemble de plusieurs (en pratique, trois à cinq) *sommations partielles,* dans lesquelles les enregistrements sont triés en classes d'angles selon l'angle d'incidence à la réflexion. À la différence des fluides où un seul type d'onde se propage, deux types d'onde se propagent dans les solides élastiques que sont les roches : les *ondes P* qui arrivent en premier et les *ondes S* qui arrivent en second. Les ondes P sont des ondes de compression-dilatation, comme les ondes acoustiques dans les fluides, c'est-à-dire que la direction de vibration de la matière au passage de l'onde est parallèle à la direction de propagation de l'onde. Les ondes S sont des ondes de cisaillement, où la direction de vibration est transverse sur la direction de propagation. L'intérêt de l'inversion stratigraphique avant sommation est que la dépendance des coefficients de réflexion en fonction de l'angle d'incidence permet la détermination non seulement de l'impédance P, mais aussi de l'impédance S, produit de la vitesse S par la masse volumique, et dans une moindre mesure de la masse volumique elle-même. L'inversion stratigraphique avant sommation est présentée dans le document FR2800473.

Une deuxième variante de l'inversion stratigraphique est l'inversion de données multi-composantes. En milieu homogène ou à incidence normale, les ondes P se transmettent ou se réfléchissent en P et les ondes S en S. En cas d'incidence oblique sur une interface, l'onde, P ou S, se transforme en deux ondes réfléchies, une P et une S, et deux ondes transmises, P et S. À terre, des géophones trois composantes (3C) permettent l'enregistrement simultané des ondes PP (P à l'aller et P au retour) et PS (P à l'aller et S au retour), le traitement les séparant ensuite grâce à leur polarisation (direction de vibration) différente. En mer, l'enregistrement des ondes PS est impossible car l'onde S se transforme en une faible onde P dans l'eau, à moins que l'on ait disposé des géophones 3C au fond de la mer (par exemple avec des *OBC*). L'utilisation des ondes S est décrite dans les documents FR2800473 et FR2873823.

Une troisième variante concerne l'inversion stratigraphique en anisotropie. Typiquement, lorsque les couches sont fracturées dans une certaine direction, les ondes sismiques, dont la longueur d'onde est largement supérieure à la distance moyenne des fractures, voient un milieu homogène mais anisotrope. Dans ce cas, le déport, qui est habituellement la distance source-récepteur, devient un vecteur horizontal, avec une longueur et un azimut. L'inversion stratigraphique devient alors elle-même dépendante de l'azimut, et ses résultats renseignent sur l'orientation des fractures, du moins lorsqu'une famille de fractures domine nettement les autres.

Une quatrième variante concerne la surveillance d'un stockage de gaz dont on suit l'évolution dans le temps au moyen d'acquisitions sismiques *échelonnées dans le temps.* Par souci de simplicité, nous évoquerons dans la suite deux époques, avant et après injection (il pourrait aussi s'agir de soutirage), mais ce qui suit pourrait s'appliquer à trois époques ou plus. La première étape consiste à faire une inversion stratigraphique pour chaque époque. À la deuxième étape, on détermine la loi t2(t1), t1 étant le temps sismique d'un horizon quelconque à l'époque 1, et t2 le temps du même événement à l'époque 2. C'est ce qu'on appelle le *warping,* qui vise à compenser le fait que le changement de fluide modifie la vitesse des roches, et donc le temps des réflexions. La troisième étape consiste en une *inversion jointe* des données des deux époques. Le fait que le résultat dans les couches où l'on sait qu'il n'y a pas de gaz soit contraint par deux sismiques au lieu d'une le rend plus fiable, et renforce par contrecoup le résultat dans la zone à gaz. Cette technique est décrite dans le document FR2933499.

Si on injecte du gaz dans un réservoir, alors son impédance acoustique, c'est-à-dire le produit de la vitesse du son par la masse volumique, diminue et les échos sont modifiés. Que ce stockage de gaz soit temporaire, pour le gaz naturel, ou définitif, pour le dioxyde de carbone, l'imagerie sismique est donc candidate pour suivre le devenir du gaz, qu'il s'agisse d'étalement dans le réservoir, de transformation chimique, où même éventuellement de fuite vers la surface.

La bande des fréquences sismiques étant limitée autant vers le bas que vers le haut, une diminution d'impédance dans une couche se manifeste sur les données'sismiques de la même manière que l'association d'une petite diminution d'impédance dans cette couche et d'une légère augmentation dans les couches voisines. Cet effet de « moyenne nulle » est dommageable à l'estimation quantitative du volume de gaz en place car la relation entre l'impédance et la saturation s'en trouve faussée.

L'invention concerne un procédé alternatif de surveillance d'une formation souterraine, au moyen d'inversion stratigraphique de données sismiques, au cours de laquelle on contraint l'impédance à ne pas diminuer ou à ne pas augmenter là où l'on sait que c'est impossible, tout en préservant la valeur de la variation, et donc de permettre de meilleures estimations des quantités de gaz injecté ou produit. Le procédé y parvient au moyen d'une anamorphose tridimensionnelle au cours de l'inversion stratigraphique.

## Le procédé selon l'invention

Ainsi un objet de l'invention concerne un procédé alternatif de surveillance d'une formation souterraine dans laquelle on injecte un gaz, à partir d'un premier jeu de données sismiques imageant une zone du sous-sol et acquis avant une injection du gaz dans une formation souterraine de ladite zone, et d'un second jeu de données sismiques imageant ladite zone du sous-sol et acquis après ladite injection du gaz. Le procédé comporte les étapes suivantes :

- on construit un cube d'une impédance sismique en onde P avant injection, IP1, au moyen d'une inversion stratigraphique dudit premier jeu de données sismiques, ledit cube discrétisant ladite zone du sous-sol en un ensemble de cellules ;

- on définit une fonction d'anamorphose $\alpha$ par une fonction comportant une limite inférieure positive B1, une limite supérieure B4, un intervalle d'identité défini entre des limites B2 et B3, avec B1 <B2<B3<B4;

- on associe à chaque cellule dudit cube, une valeur pour chaque limite B1, B2, B3 et B4;

- on associe à chaque cellule dudit cube une impédance sismique en onde P après injection, IP2, au moyen d'une inversion stratigraphique dudit second jeu de données sismiques, au cours de laquelle on applique ladite fonction d'anamorphose $\alpha$ sur lesdites impédances sismiques IP2.

- on localise ledit gaz au sein de ladite zone, en comparant ladite impédance sismique IP2 à ladite impédance sismique IP1.

Selon l'invention, on peut utiliser ladite fonction d'anamorphose $\alpha$ pour obtenir lesdites impédances sismiques IP2 au cours de l'inversion stratigraphique dudit second jeu de données sismiques, en minimisant une fonctionnelle globale F(Ig) du type :

$$F(Ig) = p_1 \left\| w * R(\alpha(Ig)) - S_0 \right\|_{L2} + p_2 \left\| Ig - Ig_0 \right\|_{L2} + p_3 \left\| P_T \left( \nabla(Ig - Ig_0) \right) \right\|_{L2}$$

avec : $Ig$ représente des impédances gaussiennes et $\alpha(Ig)=$ IP2 ; $p_1$, $p_2$ et $p_3$ des poids ; w une ondelette estimée ; $R$ ($\alpha(Ig)$) un champ de coefficients de réflexion calculé à partir des impédances vraies IP2 ; * représente le produit de convolution, $S_0$ ledit second jeu de données sismiques ; et $P_T$ représente une projection sur un plan tangent à une feuille locale d'un feuilletage sédimentaire.

Les données sismiques peuvent être des données après-sommation ou des données multi-composantes. Il peut également s'agir de données avant-sommation. Dans ce dernier cas, on peut associer en plus à chaque cellule :

- une impédance sismique en onde S avant injection, IS1 ;
- une impédance sismique en onde S après injection, IS2, obtenue par ladite inversion stratigraphique dudit second jeu de données sismiques, au cours de laquelle on utilise une seconde fonction d'anamorphose pour lesdites impédances sismiques IS2; et
- on localise ledit gaz au sein de ladite zone, en comparant ladite impédance sismique IP2 à ladite impédance sismique IP1, et en comparant ladite impédance sismique IS2 à ladite impédance sismique IS1.

La seconde fonction d'anamorphose peut être définie par une fonction comportant une limite inférieure positive BS1, une limite supérieure BS4, un intervalle d'identité défini entre des limites BS2 et BS3, avec BS1<BS2<BS3<BS4, et

$$BSn = IP_0 \sqrt{\frac{1-2BPn}{2(1-BPn)}}$$

avec : n : un entier de 1 à 4; $IP_0$ une impédance sismique en onde P a priori; [BP1, BP4] un intervalle de coefficients de Poisson possibles; et [BP2, BP3] un intervalle de coefficients de Poisson les plus probables.

Selon un mode de réalisation, l'inversion stratigraphique du second jeu de données sismiques comporte une minimisation d'une fonction coût comportant au moins la fonctionnelle Fp suivante :

$$F_P = \frac{1}{2} \sum_\Omega \left( \frac{2R-1}{2(R-1)} - v_0 \right)^2$$

avec : $R = IS2^2/IP2^2$, $\Omega$ représente ladite zone, et $v_0$ un coefficient de Poisson a priori.

On peut également associer en plus à chaque cellule :

- une densité de ladite formation souterraine avant injection ;
- une densité de ladite formation souterraine après injection, obtenue par ladite inversion stratigraphique dudit second jeu de données sismiques, au cours de laquelle on applique une troisième fonction d'anamorphose sur lesdites densités après injection; et
- on localise ledit gaz au sein de ladite zone, en comparant ladite impédance sismique IP2 à ladite impédance sismique IP1, et en comparant ladite impédance sismique IS2 à ladite impédance sismique IS1, et en comparant ladite densité après injection à ladite densité avant injection.

La troisième fonction d'anamorphose peut être définie par une fonction comportant une limite inférieure positive BD1, une limite supérieure BD4, un intervalle d'identité défini entre des limites BD2 et BD3, avec BD1<BD2<BD3<BD4, et

$$BDn = BSn^2 / \mu_0$$

avec : $\mu_0$ un module de cisaillement a priori.

Selon un mode de réalisation, l'inversion stratigraphique dudit second jeu de données sismiques comporte une minimisation de ladite fonction coût comportant au moins la fonctionnelle $F_C$ suivante :

$$F_C = \frac{1}{2} \sum_{j=2}^{N} \sum_{\Omega} \left( \frac{\rho_j}{IS2_j^2} - \frac{\rho_{j-1}}{IS2_{j-1}^2} \right)^2$$

avec : $N$ un nombre d'époques, $\rho_j$ et $IS_j$ étant respectivement une densité et une impédance sismique en onde S à une époque $j$.

De façon préférentielle, la valeur de la limite B3 en une cellule est égale à l'impédance sismique IP1 de ladite cellule.

Selon l'invention, on peut également déterminer un volume dudit gaz injecté, en réalisant les étapes suivantes :

- on détermine une porosité de ladite formation souterraine ;

- on choisit une relation entre saturation en gaz et impédance sismique d'onde P en fonction de la porosité ;

- on associe à chaque cellule dudit cube, une valeur de saturation en gaz en appliquant ladite relation auxdites valeurs d'impédance sismique en onde P après injection IP2;

- on détermine ledit volume du gaz injecté en sommant toutes les valeurs de saturation en gaz, et en pondérant ladite somme par ladite porosité moyenne et par un volume occupé par une cellule dudit cube.

Enfin, l'invention concerne également un tel procédé dans lequel on remplace l'injection de gaz par une extraction de gaz de ladite formation, ledit premier jeu de données sismiques étant acquis avant la production du gaz, et ledit second jeu de données sismiques étant acquis après ladite production du gaz. La valeur de la limite B2 en une cellule peut alors être égale à l'impédance sismique IP1 de ladite cellule. On peut également déterminer un volume de gaz extrait, en réalisant les étapes suivantes :

- on détermine une porosité de ladite formation souterraine ;

- on choisit une relation entre saturation en gaz et impédance sismique d'onde P en fonction de la porosité;

- on associe à chaque cellule dudit cube, une valeur de saturation en gaz en appliquant ladite relation auxdites valeurs d'impédance sismique en onde P après extraction ; et

- on détermine ledit volume du gaz extrait en sommant toutes les valeurs de saturation en gaz, et en pondérant ladite somme par ladite porosité moyenne et par un volume occupé par une cellule dudit cube.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 illustre un exemple d'anamorphose.

- La figure 2A montre le modèle d'impédance *Référence.*

- La figure 2B montre le modèle d'impédance *Monitor.*

- La figure 3A illustre les données sismiques associées au modèle d'impédance *Référence* (figure 2A).

- La figure 3B illustre les données sismiques associées au modèle d'impédance *Monitor* (figure 2B).

- La figure 4 représente l'ondelette utilisée pour calculer les sismiques des figures 3A et 3B.

- La figure 5A correspond au modèle a priori utilisé pour l'inversion stratigraphique des données sismiques de la figure 3A. Il s'agit d'une version lissée du modèle de la figure 2A.

- La figure 5B correspond au résultat, noté *Référence1,* de l'inversion stratigraphique des données sismiques de la figure 3A, utilisant le modèle a priori de la figure 5A.

- La figure 6A correspond au résultat, noté *Monitor1,* de l'inversion stratigraphique des données sismiques de la figure 3B, en utilisant les bornes suivantes : B1 = 1500, B2 = 1700, B3 = 7000 et B4 = 8000.

- La figure 6B correspond au résultat, noté *Monitor2,* de l'inversion stratigraphique des données sismiques de la figure 3B, en fixant la borne B3 de l'anamorphose à 5480 (le maximum de Référence1) et B4 à B3 + 5%, et B1 = 1500, B2 = 1700.

- La figure 7 correspond au résultat, noté *Monitor3,* de l'inversion stratigraphique des données sismiques de la figure 3B, en utilisant des cubes de bornes d'anamorphose.

- La figure 8 illustre une relation entre la saturation en gaz, notée S, et l'impédance P, notée IP.

## Description détaillée du procédé

L'invention concerne un procédé de surveillance d'une formation souterraine dans laquelle, soit on injecte un gaz, dans le cadre d'une surveillance d'un site de stockage géologique de gaz par exemple, soit on extrait un gaz de la formation souterraine, dans le cadre de production d'hydrocarbures par exemple. La surveillance est réalisée au moyen d'un premier jeu de données sismiques imageant une zone du sous-sol et acquis avant une injection/production du gaz, et d'un second jeu de données sismiques imageant la même zone après l'injection/production du gaz.
Le procédé comporte les étapes suivantes :

- on construit un cube d'une impédance sismique en onde P avant injection, IP1 ;

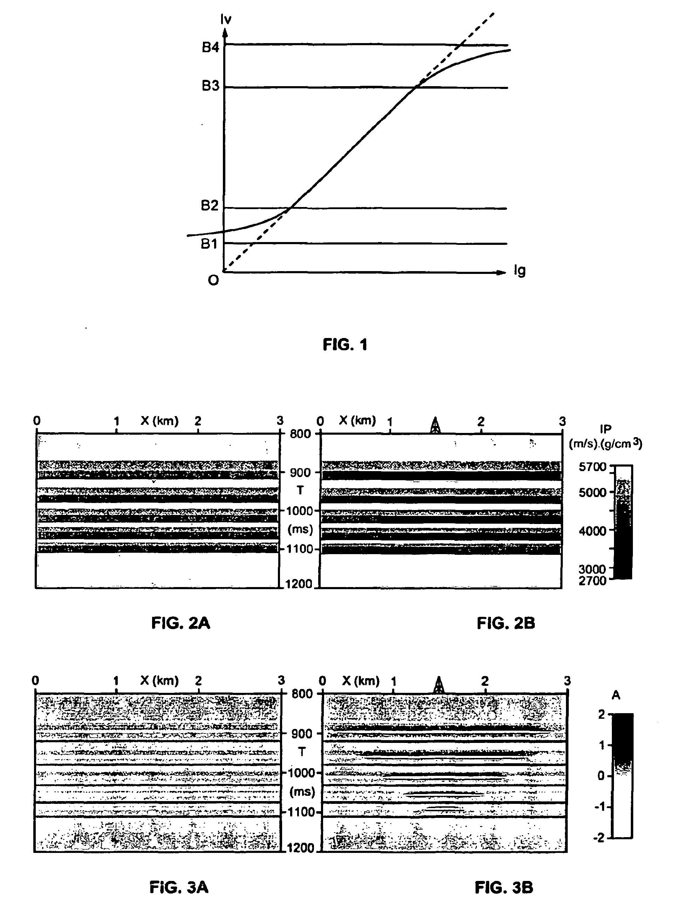

- on définit une fonction d'anamorphose Iv=$\alpha$(Ig), qui transforme une impédance gaussienne Ig en l'impédance vraie Iv (figure 1), par une fonction comportant une limite inférieure positive B1, une limite supérieure B4, un intervalle d'identité défini entre des limites B2 et B3, avec B1<B2<B3<B4;

- on associe à chaque cellule dudit cube, une valeur pour chaque limite B1, B2, B3 et B4;

- on associe à chaque cellule dudit cube une impédance sismique en onde P après injection, IP2, au moyen d'une inversion stratigraphique dudit second jeu de données sismiques, au cours de laquelle on applique ladite fonction d'anamorphose $\alpha$ sur lesdites impédances sismiques IP2.

- on localise ledit gaz au sein de ladite zone, en identifiant des cellules dudit cube où ladite impédance sismique IP2 est inférieure à ladite impédance sismique IP1.

L'invention est décrite à travers un exemple synthétique correspondant à un stockage de dioxyde de carbone dans une formation souterraine. Le procédé peut alors comporter les étapes suivantes :

1. Acquisition de données sismiques avant et après injection du gaz

2. Inversion des données sismiques acquises avant injection

3. Construction de cubes de bornes d'anamorphose

4. Inversion avec anamorphose des données sismiques acquises après injection

5. Localisation du gaz injecté

6. Estimation du volume de gaz injecté

Au cours de la description de l'invention, toutes les impédances sont en (m/s).(g/cm$^3$).

### *Description du modèle synthétique de référence*

On considère deux inversions stratigraphiques, la première avant injection, la seconde après.

La figure 2A montre une coupe verticale d'un champ d'impédance noté *Référence*, avec plusieurs réservoirs gréseux en gris foncé, surmontés de couches d'argiles gréseuses en gris moyen, les couches d'argile étant en gris clair. Toutes les couches sont horizontales, homogènes et saturées d'eau. X est l'abscisse en km, T est le temps sismique en millisecondes et IP l'impédance P en (m/s).(g/cm$^3$).

La figure 2B montre une coupe verticale d'un champ d'impédance noté *Monitor*, semblable à *Référence*, mais après injection de gaz dans les grès. La zone à gaz est invariante par rotation autour de la verticale passant par le puits.

La figure 3A montre la couverture multiple (obtenue par modélisation 1D) associée au modèle *Référence.* Ces données sismiques avant injection sont notées *DSAI.* La figure 3B montre la sismique associée au modèle *Monitor.* Ces données sismiques après injection sont notées *DSPI.*

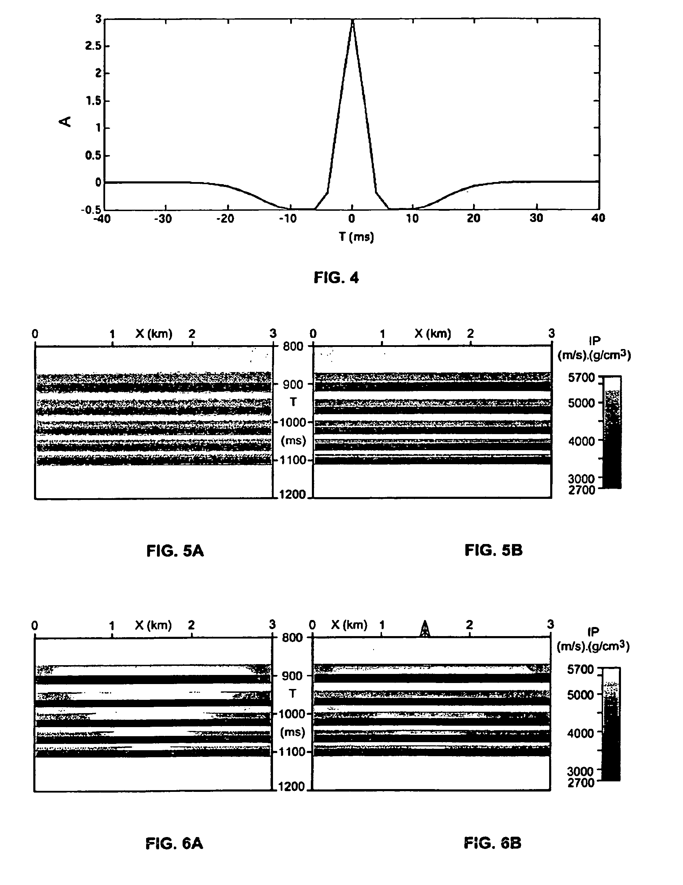

L'ondelette utilisée est dans les deux cas celle de la figure 4. Cette ondelette est la superposition de trois Ricker de 35, 70 et 105 Hz. Du fait de la variation des vitesses, la position des couches devrait différer entre les modèles *Référence* et *Monitor*, mais on a gardé la même par souci de simplicité.

L'amplitude sismique est notée A sur les figures. Elle est en unité arbitraire.

### *Application du procédé selon l'invention*

#### 1. Acquisition de données sismiques avant et après injection du gaz

Selon l'exemple utilisé pour décrire l'invention, les données sismiques que l'on obtiendrait par une acquisition classique connue des spécialistes seraient les données sismiques *DSAI* (figure 3A), pour les données sismiques avant injection, et les données sismiques *DSPI* (figure 3B), pour les données sismiques après injection.

#### 2. Inversion des données sismiques acquises avant injection

On effectue une inversion stratigraphique des données *DSAI.* Cette inversion stratigraphique permet de construire un cube d'impédance sismique en onde P avant injection, IP1. Ce cube discrétise la zone du sous-sol en un ensemble de cellules.

Pour ce faire, on utilise une technique telle que celle décrite dans le document FR2765692. Pour appliquer cette technique d'inversion, on utilise

- l'ondelette de la figure 4 ;

- le modèle a priori de la figure 5A, qui résulte d'un lissage du modèle *Référence*;

- un modèle initial d'impédance constante 3500;

- un rapport bruit sur signal de 15% ;

- une incertitude sur l'impédance a priori de 500

- une longueur de corrélation de 50 m ;et

- un nombre maximal d'itérations de 300.

On peut utiliser les logiciels Interwell® (IFP, France) ou Presti® (IFP, France) pour réaliser cette étape. La fonctionnelle minimisée est :

$$F(I) = p_1 \| w * R(I) - S_0 \|_{L2} + p_2 \| I - I_0 \|_{L2} + p_3 \| P_T (\nabla (I - I_0)) \|_{L2}, \qquad (1)$$

Les impédances sismiques issues de cette inversion stratigraphique sont notées *Référence1* et sont illustrées sur la figure 5B.

3. Construction de cubes de bornes d'anamorphose tridimensionnelle

Un objet de la présente invention est d'empêcher l'impédance de diminuer ou d'augmenter là où l'on sait que c'est impossible, tout en préservant la valeur de la variation, et donc de permettre de meilleures estimations des quantités de gaz enfoui.

Pour résoudre ce problème, on utilise une anamorphose tridimensionnelle sur les impédances, dont les bornes sont définies en tout point de discrétisation du milieu. C'est-à-dire qu'à chaque valeur d'impédance, correspond quatre bornes d'anamorphose.

Une définition de l'anamorphose est donnée dans le document suivant :

Maria Helena DOMINGUES RAMOS, 2002, "Analyse de la pluviométrie sous des systèmes nuageux convectifs - Étude de cas sur des données de la ville de Marseille et de la méthode ISIS de Météo-France", Thèse, Laboratoire d'étude des Transferts en Hydrologie et Environnement (LTHE, UMR 5564, CNRS, INPG, IRD, UJF), p. 134.

Selon ce document, "on désigne par *anamorphose* toute fonction non décroissante et monotone, transportant une loi continue vers une autre loi (continue ou non). Une anamorphose gaussienne permet d'exprimer la variable aléatoire Z de distribution de probabilité quelconque en fonction de la variable U de la loi gaussienne standard".

La figure 1 montre que l'anamorphose transforme une impédance gaussienne Ig en l'impédance vraie Iv. Ajoutons que l'optimisation par gradient conjugué requiert la différentiabilité de l'anamorphose.

Dans le cadre de l'invention, l'anamorphose $\alpha$ est définie par : Iv=$\alpha$(Ig), Iv étant l'impédance vraie, anamorphose de l'impédance gaussienne Ig.

Pour répondre à l'objectif d'empêcher l'impédance de diminuer ou d'augmenter là où l'on sait que c'est impossible, on définit la fonction d'anamorphose $\alpha$ par une fonction comportant :

- une limite inférieure positive, notée B1 ;

- une limite supérieure, notée B4 ;

- un intervalle d'identité défini entre des limites B2 et B3, avec B1 <B2<B3<B4;

L'intervalle d'identité, défini entre les bornes B2 et B3, permet de supprimer l'anamorphose si toutes les impédances sont comprises entre B2 et B3. En effet, dans cet intervalle, et par définition, Iv=Ig. Dans le cas contraire, quelles que soient les valeurs des impédances anamorphosées trouvées à l'issue de l'inversion, le retour aux impédances vraies fera tenir celles-ci dans l'intervalle compris entre B1 et B4. L'intérêt de cet intervalle d'identité est crucial pour permettre de meilleures estimations des quantités de gaz enfoui.

Un exemple d'anamorphose $\alpha$ vérifiant ces propriétés est illustré sur la figure 1. Si toutes les impédances restent entre B2 et B3, l'anamorphose ne change rien, sinon, quelles que soient les valeurs de l'impédance gaussienne à l'issue de l'inversion (Ig), les impédances vraies (Iv) correspondantes seront comprises entre B1 et B4. La droite en pointillé est le graphe de la fonction identité, Iv = Ig.

Selon l'invention, les bornes de l'anamorphose sont définies en chaque point. On construit donc quatre cubes de bornes d'anamorphose, de manière à adapter l'anamorphose à chaque échantillon. Pour ce faire, on associe à chaque cellule du cube, une valeur pour chaque limite B1, B2, B3 et B4. On peut ainsi prendre en compte la nature des terrains géologiques (faciès lithologique ou faciès sismique).

Tout d'abord, on sait que ies impédances peuvent diminuer entre *Référence* et *Monitor*, du fait de l'injection d'un gaz, mais elles ne peuvent pas augmenter. De ce fait, selon un mode de réalisation préféré, le cube de borne B3 est égale au cube *Référence1* (impédances sismiques issues de l'inversion stratigraphique des données *DSAI*) : B3 = *Référence1*.

La dérivabilité de l'anamorphose, qu'impose l'optimisation par le gradient conjugué, oblige à prendre B4 strictement supérieur à B3, et, de manière préférentielle, d'au moins quelques pourcents.

Pour le cube de borne B2, on utilise de façon préférentielle une valeur constante plus faible que toute impédance vraisemblable.

Pour le cube de borne B1, on utilise de façon préférentielle une valeur constante, strictement inférieure à l'impédance B2, tout en restant positive.

<u>4. Inversion avec anamorphose des données sismiques acquises après injection</u>

On effectue une inversion stratigraphique des données *DSPI*. Cette inversion stratigraphique permet d'associer à chaque cellule du cube une impédance sismique en onde P après injection, IP2.

Pour ce faire, on utilise la même technique d'inversion qu'à l'étape 2, mais en appliquant la fonction d'anamorphose $\alpha$ sur les impédances sismiques IP2.

L'idée est la suivante : on optimise une impédance gaussienne, obtenue par anamorphose inverse de l'impédance vraie, sur laquelle porte la fonctionnelle géologique, mais on repasse au vol aux impédances vraies pour évaluer correctement la fonctionnelle sismique.

De manière précise, l'équation (2) décrit la fonctionnelle globale avec l'anamorphose Iv=$\alpha$(Ig) Iv étant l'impédance vraie et Ig l'impédance gaussienne,

$$F(Ig) = p_1 \left\| w * R(\alpha(Ig)) - S_0 \right\|_{L2} + p_2 \left\| Ig - Ig_0 \right\|_{L2} + p_3 \left\| P_T(\nabla(Ig - Ig_0)) \right\|_{L2} \quad (2)$$

Une autre écriture est possible avec Ig = $\beta$(*Iv*), équivalente à la précédente et peut-être plus naturelle,

$$F(Iv) = p_1 \left\| w * R(Iv) - S_0 \right\|_{L2} + p_2 \left\| \beta(Iv) - \beta(Iv_0) \right\|_{L2} + p_3 \left\| P_T(\nabla(\beta(Iv) - \beta(Iv_0))) \right\|_{L2} \quad (3)$$

mais l'équation (2) est nettement plus facile à programmer.

Pour appliquer cette technique d'inversion, on utilise

- l'ondelette de la figure 4 ;

- *Référence1* comme modèle a priori ;

- un modèle initial d'impédance constante 3500;

- un rapport bruit sur signal de 15% ;

- une incertitude sur l'impédance a priori de 500

- une longueur de corrélation de 50 m ;

- un nombre maximal d'itérations de 300 ; et

- les cubes de bornes d'anamorphoses B1, B2, B3 et B4 définis à l'étape 3.

On peut utiliser les logiciels Interwell® (IFP, France) ou Presti® (IFP, France) pour réaliser cette étape.

<u>5. Localisation du gaz injecté</u>

On localise alors le gaz injecté au sein de la zone, en identifiant les cellules du cube où l'impédance sismique IP2 est inférieure à l'impédance sismique IP1.

<u>6. Estimation du volume de gaz injecté</u>

La surveillance d'un stockage de gaz ne vise pas seulement à imager le sous-sol de manière qualitative, mais aussi de manière quantitative, par exemple en évaluant le volume de gaz stocké.

Les cubes de données utilisés sont constitués de cellules, connues des spécialistes sous le nom "*voxel*" (contraction des termes anglais "volumetric pixel"). Ces cellules sont de dimensions $\Delta x$, $\Delta y$, et $\Delta z$ connues. Dans les directions horizontales ces dimensions $\Delta x$ et $\Delta y$ sont connues des spécialistes sous le nom "intertrace". Ce sont des données d'acquisition qui correspondent aux distances entre les points d'enregistrement successifs pour un même point de tir, respectivement dans les directions $x$ et $y$. La dimension verticale $\Delta z$ est le taux d'échantillonnage $\Delta t$ d'enregistrement des données sismiques, convertie en profondeur par conversion temps-profondeur.

Le volume total de gaz injecté, noté *VTC*, peut être calculé en sommant toutes les valeurs du cube de saturation en gaz pondérées par la porosité $\phi$ de la roche, et en pondérant le résultat par le volume occupé par une cellule, soit :

$$(16) \qquad VTC = \Delta x \times \Delta y \times \Delta z \sum_{x,y,z} \phi(x,y,z) \times SCP(x,y,z)$$

La porosité $\phi$ de la roche, définie par le rapport entre le volume des pores et le volume total de la roche, est mesurée ou estimée par les spécialistes à partir des diagraphies ou des mesures sur échantillons issus des puits (par exemple, Calvert, 2005). Cette grandeur est une caractéristique du milieu poreux.

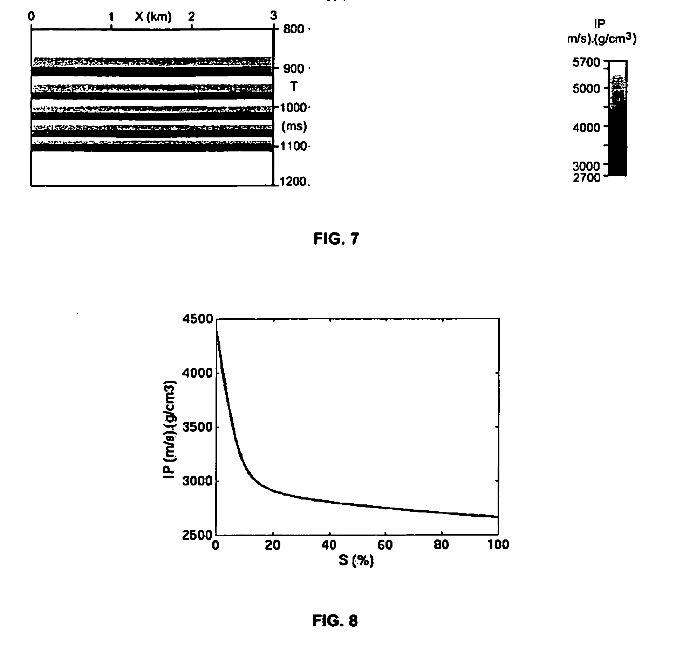

En utilisant la relation saturation en gaz (S) vs. impédance P (IP) de la figure 8, on peut évaluer le volume de gaz pour chacun des modèles. Cette relation est fortement non-linéaire car il suffit d'un tout petit peu de gaz pour augmenter notablement la compressibilité de la phase fluide, donc celle de la roche.

Le tableau 1 indique pour les modèles Monitor1, Monitor2 et Monitor3, ainsi que pour le modèle exact Monitor :
- les volumes V de gaz estimés en utilisant la loi saturation impédance P de la figure 8,
- l'écart-type D de la différence d'impédance avec Monitor. Il est clair que l'usage de l'anamorphose pour limiter l'augmentation d'impédance améliore la précision du résultat, qu'il s'agisse d'écart-type ou de volume de gaz mesuré.
- l'impédance minimale Imin
- l'impédance maximale Imax

| Modèle | Imin | Imax | D | V (hm$^3$) |
|---|---|---|---|---|
| Monitor | 2670 | 5500 | (0) | 13,95 |
| Monitor1 | 2896 | 6249 | 109 | 5,46 |
| Monitor2 | 2758 | 5651 | 58 | 8,71 |
| Monitor3 | 2729 | 5602 | 44 | 10,42 |

**Variantes**

On a décrit l'invention dans le cadre d'une inversion stratigraphique après sommation. Mais l'invention s'applique tout aussi bien dans le cadre d'une inversion stratigraphique de données multi-composantes (FR2800473 et FR2873823), ou dans le cadre d'une inversion stratigraphique avant sommation (FR2800473), ou encore dans le cadre d'une inversion stratigraphique avec prise en compte de l'anisotropie.

En inversion stratigraphique avant sommation, on dispose de plusieurs sommations partielles correspondant à divers angles d'incidence à la réflexion. La variation du coefficient de réflexion en fonction de cet angle fournit une information, non seulement sur l'impédance P, mais aussi sur l'impédance S et la densité. Notons que l'impédance S est alors moins bien déterminée que l'impédance P, et la densité encore moins bien. En cas d'injection de dioxyde de carbone, l'impédance S et la densité diminuent, de sorte que, comme pour l'impédance P, on utilise une anamorphose pour les empêcher d'augmenter.

Dans ce cas, on applique une anamorphose aux trois quantités suivantes : impédance P, impédance S et masse volumique.

En matière d'impédance P, impédance S et densité, il arrive que l'on dispose d'informations non seulement sur chacune d'elles, mais encore sur des quantités couplées telles que le coefficient de Poisson et le module de cisaillement. Si le coefficient de Poisson est connu avec une certaine précision, alors les cubes de bornes d'anamorphose BS1, BS2, BS3 et BS4 de l'impédance S peuvent être choisies en fonction de cette précision : si [BP1, BP4] est l'intervalle des coefficients de Poisson possibles et [BP2, BP3] l'intervalle des coefficients de Poisson les plus probables, alors les bornes d'anamorphose de l'impédance S seront $BSn = IP_0 \sqrt{\frac{1-2BPn}{2(1-BPn)}}$ , n allant de 1 à 4 et $IP_0$ désignant l'impédance P a priori. En fin d'inversion, l'impédance P optimale pouvant différer sensiblement de l'a priori, il peut être judicieux de réévaluer les bornes de l'impédance S pour un complément d'optimisation. Comme précédemment, ceci peut s'appliquer pixel par pixel, c'est-à-dire, en construisant des cubes de bornes d'anamorphose.

Dans le cas d'une injection de dioxyde de carbone dans un réservoir, il arrive que la perméabilité soit suffisante pour que la pression reste stable. La contrainte effective est donc inchangée, et les propriétés élastiques de la matrice solide sont conservées, en particulier le module de cisaillement $\mu$. Du fait que $IS^2 = \mu\rho$, IS étant l'impédance S et $\rho$ la densité, on définit des bornes BDn sur la densité : $BDn = BSn^2/\mu_0$, $\mu_0$ étant le module de cisaillement a priori. Il importe d'insister sur le grand avantage de l'inversion jointe : le module de cisaillement étant constant dans le temps, l'équation $IS^2 = \mu\rho$ déjà évoquée introduit une relation entre les couples (IS, $\rho$) aux différentes époques d'autant plus forte que ces époques sont plus nombreuses. Comme précédemment, l'impédance S optimale pouvant différer sensiblement de l'a priori, une réévaluation des bornes sur la densité précédera une optimisation complémentaire.

Il est possible d'éviter ces optimisations complémentaires en ajoutant deux nouvelles fonctionnelles à la classique somme : fonctionnelle sismique plus fonctionnelle a priori sur chacun des paramètres. La première porte sur le coefficient de Poisson et s'énonce

$$F_P = \tfrac{1}{2} \sum_{\Omega} \left( \frac{2R-1}{2(R-1)} - v_0 \right)^2 \text{, avec R=IS}^2\text{/IP}^2,$$

$\Omega$ étant le domaine inversé (le cube sismique englobant le réservoir) et $v_0$ le coefficient de Poisson a priori. La seconde exprime la constance du module de cisaillement,

$$F_C = \tfrac{1}{2} \sum_{n=2}^{N} \sum_{\Omega} \left( \frac{\rho_n}{IS_n^2} - \frac{\rho_{n-1}}{IS_{n-1}^2} \right)^2,$$

N étant le nombre d'époques,
$\rho_n$ et $IS_n$ étant respectivement la densité et l'impédance S à l'époque $n$.

On a décrit l'invention dans le cadre d'injection de gaz, mais l'invention peut également s'appliquer dans le cadre de soutirage de fluide d'une formation souterraine. Dans ce cas, les impédances peuvent augmenter du fait du soutirage du gaz, mais elles ne peuvent pas diminuer. De ce fait, selon un mode de réalisation, c'est le cube de borne B2 qui est égal au cube des impédances sismiques avant soutirage, issues de l'inversion stratigraphique des données DSAI. Dans ce cas, on localise les zones de production de gaz, en repérant les zones où les impédances après production sont supérieures aux impédances avant production.

Dans ce cadre, on peut également déterminer un volume de gaz extrait, en réalisant les étapes suivantes :

- on détermine la porosité de la formation souterraine ;
- on choisit une relation entre saturation en gaz et impédance sismique d'onde P en fonction de la porosité ;
- on associe à chaque cellule du cube, une valeur de saturation en gaz en appliquant la relation auxdites valeurs d'impédance sismique en onde P après extraction ; et
- on détermine le volume du gaz extrait en sommant toutes les valeurs de saturation en gaz, et en pondérant la somme par ladite porosité et par un volume occupé par une cellule du cube.

Ainsi, l'invention s'applique à la surveillance d'un site de stockage géologique d'un gaz, mais également à la surveillance de la production d'un gaz contenu dans un réservoir géologique.

**Exemples/Avantages**

Exemple 1 : anamorphose « large »

Dans cet exemple, les bornes d'anamorphose de l'inversion sont B1 = 1500, B2 = 1700, B3 = 7000 et B4 = 8000. Ces valeurs éloignées de l'intervalle des impédances concernées par l'inversion correspondent à la motivation « standard » d'éviter les impédances négatives ainsi que les valeurs excessivement grandes.

Les impédances sismiques issues de cette inversion stratigraphique sont notées Monitor1 et sont illustrées sur la figure 6A.

On voit sur la figure 6A une nette diminution de l'impédance dans les grès, associée à une augmentation tout aussi nette de l'impédance dans les argiles et argiles gréseuses. Cette augmentation, qui n'a pas lieu d'être parce que les argiles ne sont pas concernées par la mise en gaz, s'explique par le fait que la sismique est de moyenne nulle, de sorte qu'une pure diminution d'impédance se traduit immanquablement en l'association d'une diminution et d'une augmentation à proximité.

Exemple 2 : anamorphose « contrainte constante »

Sachant que les impédances peuvent diminuer mais pas augmenter entre *Référence* et *Monitor*, les bornes d'anamorphose de l'inversion sont B1 = 1500, B2 = 1700, B3 = 5480, qui est la valeur maximale de Référence1, et B4 = B3 + 5%.

Les impédances sismiques issues de cette inversion stratigraphique sont notées *Monitor2* et sont illustrées sur la figure 6B.

La diminution d'impédance dans les grès est nettement renforcée par rapport à Monitor1, tandis que l'augmentation dans les argiles ou argiles gréseuses est nettement atténuée. Cependant, le fait que la borne B3 soit constante ne lui permet d'agir, et imparfaitement, que sur les argiles dont l'impédance est la plus forte.

Exemple 3 : anamorphose « contrainte distribuée »

Dans cet exemple, la contrainte de « quasi non augmentation » est distribuée, c'est-à-dire adaptée à chaque pixel, et les bornes sont ainsi définies :

- Le cube de borne B3 est égale au cube *Référence1* (impédances sismiques issues de l'inversion stratigraphique des données *DSAI*) : B3 = *Référence1* ;

- Le cube de borne B4 est égale au cube de borne B3 auquel on ajoute 5% à chaque valeur : B4 = B3+5% ;

- Le cube de borne B1 est un cube constant de valeur 1500.

- Le cube de borne B2 est un cube constant de valeur 1700.

Le résultat de cette inversion *Monitor3* apparait sur la figure 7, qui peut être comparée avec *Monitor2* (figure 6B) et au modèle exact *Monitor* (figure 2B).

**Revendications**

1. Procédé de surveillance d'une formation souterraine dans laquelle on injecte un gaz, à partir d'un premier jeu de données sismiques imageant une zone du sous-sol et acquis avant une injection du gaz dans une formation souterraine de ladite zone, et d'un second jeu de données sismiques imageant ladite zone du sous-sol et acquis après ladite injection du gaz, **caractérisé en ce qu'**on réalise les étapes suivantes :

   - on construit un cube d'une impédance sismique en onde P avant injection, IP1, au moyen d'une inversion stratigraphique dudit premier jeu de données sismiques, ledit cube discrétisant ladite zone du sous-sol en un ensemble de cellules ;
   - on définit une fonction d'anamorphose a par une fonction comportant une limite inférieure positive B1, une limite supérieure B4, un intervalle d'identité défini entre des limites B2 et B3, avec B1<B2<B3<B4;
   - on associe à chaque cellule dudit cube, une valeur pour chaque limite B1, B2, B3 et B4 ;
   - on associe à chaque cellule dudit cube une impédance sismique en onde P après injection, IP2, au moyen d'une inversion stratigraphique dudit second jeu de données sismiques, au cours de laquelle on applique ladite fonction d'anamorphose $\alpha$ sur lesdites impédances sismiques IP2.
   - on localise ledit gaz au sein de ladite zone, en comparant ladite impédance sismique IP2 à ladite impédance sismique IP1.

2. Procédé selon la revendication 1, dans lequel on utilise ladite fonction d'anamorphose $\alpha$ pour obtenir lesdites impédances sismiques IP2 au cours de l'inversion stratigraphique dudit second jeu de données sismiques, en minimisant une fonctionnelle globale $F(Ig)$ du type :

$$F(Ig) = p_1 \| w * R(\alpha(Ig)) - S_0 \|_{L2} + p_2 \| Ig - Ig_0 \|_{L2} + p_3 \| P_T (\nabla(Ig - Ig_0)) \|_{L2}$$

avec : $Ig$ représente des impédances gaussiennes et $\alpha(Ig)=$ IP2 ; $p_1$, $p_2$ et $p_3$ des poids ; w une ondelette estimée ; $R(\alpha(Ig))$ un champ de coefficients de réflexion calculé à partir des impédances vraies IP2 ; * représente le produit de convolution, $S_0$ ledit second jeu de données sismiques ; et $P_T$ représente une projection sur un plan tangent à une feuille locale d'un feuilletage sédimentaire.

3. Procédé selon l'une des revendications précédentes, dans lequel lesdites données sismiques sont des données après-sommation ou des données multi-composantes.

4. Procédé selon l'une des revendications 1 à 2, dans lequel lesdites données sismiques sont des données avant-sommation, et on associe en plus à chaque cellule :

   - une impédance sismique en onde S avant injection, IS1 ;
   - une impédance sismique en onde S après injection, IS2, obtenue par ladite inversion stratigraphique dudit second jeu de données sismiques, au cours de laquelle on utilise une seconde fonction d'anamorphose pour lesdites impédances sismiques IS2; et
   - on localise ledit gaz au sein de ladite zone, en comparant ladite impédance sismique IP2 à ladite impédance sismique IP1, et en comparant ladite impédance sismique IS2 à ladite impédance sismique IS1.

5. Procédé selon la revendication 4, dans lequel ladite seconde fonction d'anamorphose est définie par une fonction comportant une limite inférieure positive BS1, une limite supérieure BS4, un intervalle d'identité défini entre des limites BS2 et BS3, avec BS1<BS2<BS3<BS4, et

$$BSn = IP_0 \sqrt{\frac{1-2BPn}{2(1-BPn)}}$$

avec : n : un entier de 1 à 4; $IP_0$ une impédance sismique en onde P a priori; [BP1, BP4] un intervalle de coefficients de Poisson possibles; et [BP2, BP3] un intervalle de coefficients de Poisson les plus probables.

6. Procédé selon la revendication 5, dans lequel ladite inversion stratigraphique dudit second jeu de données sismiques comporte une minimisation d'une fonction coût comportant au moins la fonctionnelle $F_p$ suivante :

$$F_P = \frac{1}{2} \sum_{\Omega} \left( \frac{2R-1}{2(R-1)} - v_0 \right)^2$$

avec : $R=IS2^2/IP2^2$, $\Omega$ représente ladite zone, et $v_0$ un coefficient de Poisson a priori.

7. Procédé selon l'une des revendications 4 à 6, dans lequel on associe en plus à chaque cellule :

   - une densité de ladite formation souterraine avant injection ;
   - une densité de ladite formation souterraine après injection, obtenue par ladite inversion stratigraphique dudit second jeu de données sismiques, au cours de laquelle on applique une troisième fonction d'anamorphose sur lesdites densités après injection; et
   - on localise ledit gaz au sein de ladite zone, en comparant ladite impédance sismique IP2 à ladite impédance sismique IP1, et en comparant ladite impédance sismique IS2 à ladite impédance sismique IS1, et en comparant ladite densité après injection à ladite densité avant injection.

8. Procédé selon la revendication 7, dans lequel ladite troisième fonction d'anamorphose est définie par une fonction comportant une limite inférieure positive BD1, une limite supérieure BD4, un intervalle d'identité défini entre des limites BD2 et BD3, avec BD1<BD2<BD3<BD4, et

$$BDn = BSn^2 / \mu_0$$

avec : $\mu_0$ un module de cisaillement a priori.

9. Procédé selon la revendication 8, dans lequel ladite inversion stratigraphique dudit second jeu de données sismiques comporte une minimisation de ladite fonction coût comportant au moins la fonctionnelle $F_C$ suivante :

$$F_C = \frac{1}{2} \sum_{j=2}^{N} \sum_{\Omega} \left( \frac{\rho_j}{IS2_j^2} - \frac{\rho_{j-1}}{IS2_{j-1}^2} \right)^2$$

avec : N un nombre d'époques, $\rho_j$ et $IS_j$ étant respectivement une densité et une impédance sismique en onde S à une époque j.

10. Procédé selon l'une des revendications précédentes, dans lequel la valeur de la limite B3 en une cellule est égale à l'impédance sismique IP1 de ladite cellule.

11. Procédé selon l'une des revendications précédentes, dans lequel on détermine également un volume dudit gaz injecté, en réalisant les étapes suivantes :

- on détermine une porosité moyenne de ladite formation souterraine ;
- on choisit une relation entre saturation en gaz et impédance sismique d'onde P;
- on associe à chaque cellule dudit cube, une valeur de saturation en gaz en appliquant ladite relation auxdites valeurs d'impédance sismique en onde P après injection IP2;
- on détermine ledit volume du gaz injecté en sommant toutes les valeurs de saturation en gaz, et en pondérant ladite somme par ladite porosité moyenne et par un volume occupé par une cellule dudit cube.

12. Procédé selon l'une des revendications 1 à 9, dans lequel on remplace l'injection de gaz par une extraction de gaz de ladite formation, ledit premier jeu de données sismiques étant acquis avant la production du gaz, et ledit second jeu de données sismiques étant acquis après ladite production du gaz.

13. Procédé selon la revendication 12, dans lequel la valeur de la limite B2 en une cellule est égale à l'impédance sismique IP1 de ladite cellule.

14. Procédé selon l'une des revendications 12 et 13, dans lequel on détermine également un volume dudit gaz extrait, en réalisant les étapes suivantes :

- on détermine une porosité de ladite formation souterraine ;
- on choisit une relation entre saturation en gaz et impédance sismique d'onde P en fonction de la porosité ;
- on associe à chaque cellule dudit cube, une valeur de saturation en gaz en appliquant ladite relation auxdites valeurs d'impédance sismique en onde P après extraction ; et
- on détermine ledit volume du gaz extrait en sommant toutes les valeurs de saturation en gaz, et en pondérant ladite somme par ladite porosité et par un volume occupé par une cellule dudit cube.

## Claims

1. A method of monitoring an underground formation into which a gas is injected, from a first set of seismic data imaging a subsoil zone and acquired before gas injection into an underground formation of said zone, and from a second set of seismic data imaging said subsoil zone and acquired after said gas injection, **characterized in that** it comprises the following stages:

- constructing a pre-injection P-wave seismic impedance cube IP1 by means of a stratigraphic inversion of said first seismic data set, said cube discretizing said subsoil zone into a set of cells.

- defining an anamorphosis function $\alpha$ by a function comprising a positive lower limit B1, an upper limit B4, an identity interval defined between limits B2 and B3, with B1<B2<B3<B4.
- associating with each cell of said cube a value for each limit B1, B2, B3 and B4,
- associating with each cell of said cube a post-injection P-wave seismic impedance IP2 by means of a stratigraphic inversion of said second seismic data set, wherein said anamorphosis function $\alpha$ is applied to said seismic impedances IP2,
- locating said gas within said zone by comparing said seismic impedance IP2 with said seismic impedance IP1.

2. A method as claimed in claim 1, wherein said anamorphosis function a is used to obtain said seismic impedances IP2 during stratigraphic inversion of said second seismic data set, by minimizing a global functional $F(Ig)$ of the type as follows:

$$F(Ig) = p_1 \left\| w * R(\alpha(Ig)) - S_0 \right\|_{L2} + p_2 \left\| Ig - Ig_0 \right\|_{L2} + p_3 \left\| P_T \left( \nabla(Ig - Ig_0) \right) \right\|_{L2}$$

where $Ig$ represents Gaussian impedances and $\alpha(Ig)$ = IP2 : $p_1$, $p_2$ and $p_3$ weights ; w an estimated wavelet ; $R(\alpha(Ig))$ a reflection coefficient field calculated from the true impedances IP2 ; * represents the convolution product, $S_0$ said second seismic data set, and $P_T$ represents a projection onto a plane tangential to a local lamina of a sedimentary lamination.

3. A method as claimed in any one of the previous claims, wherein said seismic data are post-stack data or multi-component data.

4. A method as claimed in any one of claims 1 to 2, wherein said seismic data are pre-stack data and the following is additionally associated with each cell:

- a pre-injection S-wave seismic impedance IS1,
- a post-injection S-wave seismic impedance IS2 obtained by means of said stratigraphic inversion of said second seismic data set, wherein a second anamorphosis function is used for said seismic impedances IS2, and
- locating said gas in said zone by comparing said seismic impedance IP2 with said seismic impedance IPI, and by comparing said seismic impedance IS2 with said seismic impedance IS1.

5. A method as claimed in claim 4, wherein said second anamorphosis function is defined by a function comprising a positive lower limit BS1, an upper limit BS4, an identity interval defined between limits BS2 and BS3, with BS1<BS2<BS3<BS4, and

$$BSn = IP_0 \sqrt{\frac{1 - 2BPn}{2(1 - BPn)}}$$

with: n: an integer from 1 to 4 ; $IP_0$ an a priori P-wave seismic impedance ; [BP1, BP4] an interval of possible Poisson coefficients ; and [BP2, BP3] an interval of likeliest Poisson coefficients.

6. A method as claimed in claim 5, wherein said stratigraphic inversion of said second seismic data set comprises a minimization of a cost function comprising at least the following functional $F_p$:

$$F_P = \frac{1}{2} \sum_{\Omega} \left( \frac{2R - 1}{2(R - 1)} - v_0 \right)^2$$

with: $R = IS2^2/IP2^2$, $\Omega$ represents said zone, and $v_0$ an a priori Poisson coefficient.

7. A method as claimed in any one of claims 4 to 6, wherein the following is additionally associated with each cell:

- a pre-injection density of said underground formation,

- a post-injection density of said underground formation, obtained by said stratigraphic inversion of said second seismic data set, wherein a third anamorphosis function is applied to said post-injection densities, and
- locating said gas in said zone by comparing said seismic impedance IP2 with said seismic impedance IP1, by comparing said seismic impedance IS2 with said seismic impedance IS1, and by comparing said post-injection density with said pre-injection density.

8. A method as claimed in claim 7, wherein said third anamorphosis function is defined by a function comprising a positive lower limit BD1, an upper limit BD4, an identity interval defined between limits BD2 and BD3, with BD1<BD2<BD3<BD4, and

$$BDn = BSn^2 / \mu_0$$

with: $\mu_0$ an a priori shear modulus.

9. A method as claimed in claim 8, wherein said stratigraphic inversion of said second seismic data set comprises a minimization of said cost function comprising at least the following functional $F_C$:

$$F_C = \tfrac{1}{2} \sum_{j=2}^{N} \sum_{\Omega} \left( \frac{\rho_j}{IS2_j^2} - \frac{\rho_{j-1}}{IS2_{j-1}^2} \right)^2$$

with: N a number of periods, $\rho_j$ and $IS_j$ being respectively a density and an S-wave seismic impedance at a period $j$.

10. A method as claimed in any one of the previous claims, wherein the value of limit B3 in a cell is equal to seismic impedance IP1 of said cell.

11. A method as claimed in any one of the previous claims, wherein a volume of said injected gas is also determined by carrying out the following stages:

- determining a mean porosity of said underground formation.
- selecting a relation between gas saturation and P-wave seismic impedance,
- associating with each cell of said cube a gas saturation value by applying said relation to said post-injection P-wave seismic impedance values IP2,
- determining said injected gas volume by adding up all the gas saturation values and by weighting said sum by said mean porosity and by a volume occupied by a cell of said cube.

12. A method as claimed in any one of claims 1 to 9, wherein gas injection is replaced by gas extraction from said formation, said first seismic data set being acquired before gas production and said second seismic data set being acquired after said gas production.

13. A method as claimed in claim 12, wherein the value of limit B2 in a cell is equal to seismic impedance IP1 of said cell.

14. A method as claimed in any one of claims 12 and 13, wherein a volume of said extracted gas is also determined by carrying out the following stages:

- determining a porosity of said underground formation,
- selecting a relation between gas saturation and P-wave seismic impedance as a function of porosity.
- associating with each cell of said cube a gas saturation value by applying said relation to said post-extraction P-wave seismic impedance values, and
- determining said extracted gas volume by adding up all the gas saturation values and by weighting said sum by said porosity and by a volume occupied by a cell of said cube.

**Patentansprüche**

1.  Verfahren zum Überwachen einer unterirdischen Formation, in die ein Gas eingepresst wird, ausgehend von einem ersten Salz von seismischen Daten, die einen Bereich des Untergrunds abbilden und vor einem Einpressen des Gases in eine unterirdische Formation des Bereichs erfasst werden, und einem zweiten Satz von seismischen Daten, die den Bereich des Untergrunds abbilden und nach dem Einpressen des Gases erfasst werden, **dadurch gekennzeichnet, dass** die folgenden Schritte ausgeführt werden:

    - Kenstruieren eines Würfels mit einer seismischen Impedanz in der P-Welle vor dem Einpressen, IP1, mittels einer stratigraphischen Inversion des ersten Satzes von seismischen Daten, wobei der Würfel den Bereich des Untergrunds in eine Menge von Zellen diskretisiert;
    - Definieren einer Anamorphosefunktion a durch eine Funktion, die einen unteren positiven Grenzwert B1, einen oberen Grenzwert B4 und ein Idenfitätsintervall umfasst, das zwischen Grenzwerten B2 und B3 abgegrenzt ist, wobei B1<B2<82<B4;
    - Verknüpfen eines Werts für jeden Grenzwert B1, B2, B3 und B4 mit jeder Zelle des Würfels;
    - Verknüpfen einer seismischen Impedanz in der P-Welle nach dem Einpressen, IP2, mit jeder Zelle des Würfels mittels einer stratigraphischen Inversion der zweiten Menge von seismischen Daten, während der die Anamorphosefunktion a auf die seismischen Impedanzen IP2 angewandt wird;
    - Lokalisieren des Gases in dem Bereich durch Vergleichen der seismischen Impedanz IP2 mit der seismischen Impedanz.: IP1.

2.  Verfahren nach Anspruch 1, wobei die Anamorphosefunktion $\alpha$ verwendet wird, um die seismischen Impedanzen IP2 während der stratigraphischen Inversion des zweiten Satzes von seismischen Daten durch Minimieren eines Gesamtfunktionals $F(Ig)$ des folgenden Typs zu erhalten:

$$F(Ig) = p_1 \left\| w * R(\alpha(Ig)) - S_0 \right\|_{L2} + p_2 \| Ig - Ig_0 \|_{L2} + p_3 \| P_T(\nabla(Ig - Ig_0)) \|_{L2}$$

    wo: $Ig$ die gaußschen Impedanzen darstellt und $\alpha(Ig)$ = IP2; $\rho_1$, $\rho_2$ und $\rho_3$ Gewichte sind; w ein geschätztes Wavelet ist; $R(\alpha(Ig))$ ein Reflexionskoeffizientenbereich ist, der ausgehend von den echten Impedanzen IP2 berechnet wird; * das Faltungsprodukt darstellt, $S_0$ die zweite Menge von seismischen Daten ist, und $P_T$ eine Projektion auf einer Ebene darstellt, die ein lokales Laminit einer sedimentären Lamination tangiert.

3.  Verfahren nach einem der vorhergehenden Ansprüche, wobei die seismischen Daten Daten nach Summierung oder Mehrkomponentendaten sind.

4.  Verfahren nach einem der Ansprüche 1 bis 2, wobei die seismischen Daten Daten vor Summierung sind und außerdem Folgendes mit jeder Zelle verknüpft wird;

    - eine seismische Impedanz in der S-Welle vor dem Einpressen, IS1;
    - eine seismische Impedanz in der S-Welle nach dem Einpressen, IS2, die durch die stratigraphische Inversion des zweiten Satzes von seismischen Daten erhalten wird, während der für die seismischen Impedanzen IS2 eine zweite Anamorphosefunktion verwendet wird; und
    - das Gas in dem Bereich lokalisiert wird, indem die seismische Impedanz IP2 mit der seismischen impedanz IP1 verglichen wird, und indem die seismische Impedanz IS2 mit der seismischen Impedanz IS1 verglichen wird.

5.  Verfahren nach Anspruch 4, wobei die zweite Anamorphosefunktion durch eine Funktion definiert wird, die einen positiven unteren Grenzwert BS1, einen oberen Grenzwert BS4 und ein Identitätsintervall umfasst, das zwischen Grenzwerten BS2 und BS3 abgegrenzt wird, mit BS1<BS2<BS3<BS4, und

$$BSn = IP_0 \sqrt{\frac{1 - 2BPn}{2(BPn)}}$$

    wo: n: eine Ganzzahl von 1 bis 4 ist; $IP_0$ eine seismische Impedanz in der P-Welle a priori ist; [BP1, BP4] ein Intervall möglicher Poissonscher Zahlen ist; und [BP2. BP3] ein Intervall der wanrscheinüchsten Poissonschen Zahlen ist.

**6.** Verfahren nach Anspruch 5, wobei die stratigraphische Inversion des zweiten Satzes von seismischen Daten eine Minimierung einer Kostenfunktion umfasst, die mindestens das folgende Funktional $F_p$ umfasst:

$$F_p = \frac{1}{2} \sum_{\Omega} \left( \frac{2R-1}{2(R-1)} - v_0 \right)^2$$

wo: $R = IS2^2/IP2^2$, $\Omega$ den Bereich darstellt, und $v_0$ eine Poissonsche Zahl a priori darstellt.

**7.** Verfahren nach einem der Ansprüche 4 bis 6, wobei außerdem Folgendes mit jeder Zelle verknüpft wird:

- eine Dichte der unterirdischen Formation vor dem Einpressen;
- eine Dichte der unterirdischen Formation nach dem Einpressen, die durch die stratigraphische Inversion des zweiten Satzes von seismischen Daten erhalten wird, während der eine dritte Anamorphosefunktion auf die Dichten nach dem Einpressen angewandt wird; und
- das Gas in dem Bereich lokalisiert wird, indem die seismische Impedanz IP2 mit der seismischen Impedanz IP1 verglichen wird, indem die seismische Impedanz IS2 mit der seismischen Impedanz IS1 verglichen wird und indem die Dichte nach dem Einpressen mit der Dichte vor dem Einpressen verglichen wird

**8.** Verfahren nach Anspruch 7, wobei die dritte Anamorphosefunktion durch eine Funktion definiert wird, die einen positiven unteren Grenzwert BD1, einen oberen Grenzwert BD4 und ein Identitätsintervall umfasst, das zwischen Grenzwerten BD2 und BD3 abgegrenzt wird, mit BD1<BD2<BD3<BD4 und

$$BDn = BSn^2 / \mu_0$$

wo: $\mu_0$ ein A-Priori-Schermodul ist.

**9.** Verfahren nach Anspruch 8, wobei die stratigraphische Inversion des zweiten Satzes von seismischen Daten eine Minimierung der Kostenfunktion umfasst, die mindestens das folgende Funktional $F_c$ umfasst:

$$F_c = \frac{1}{2} \sum_{j=2}^{N} \sum_{\Omega} \left( \frac{p_j}{IS2_j^2} - \frac{p_{j-1}}{IS2_{j-1}^2} \right)^2$$

wo: $N$ eine Anzahl von Epochen ist, $p_j$ und $IS_j$ eine Dichte beziehungsweise eine seismische Impedanz in der S-Welle in einer Epoche $j$ sind.

**10.** Verfahren nach einem der vorhergehenden Ansprüche, wobei der Wert des Grenzwerts B3 in einer Zelle gleich der seismischen Impedanz IP1 der Zelle ist.

**11.** Verfahren nach einem der vorhergehenden Ansprüche, wobei auch ein Volumen des eingepressten Gases bestimmt wird, indem die folgenden Schritte ausgeführt werden:

- Bestimmen einer mittleren Porosität der unterirdischen Formation;
- Wählen einer Beziehung zwischen Gassättigung und seismischer Impedanz in der P-Welle;
- Verknüpfen eines Gassättigungswerts mit jeder Zelle des Würfels durch Anwenden der Beziehung auf die Werte der seismischen Impedanz in der P-Welle nach dem Einpressen IP2;
- Bestimmen des Volumens des eingepressten Gases durch Summieren aller Gassättigungswerte und durch Gewichten der Summe mit der mittleren Porosität und mit einem durch eine Zelle des Würfels eingenommenen Volumen.

**12.** Verfahren nach einem der Ansprüche 1 bis 9, wobei die Gaseinpressung durch eine Förderung von Gas aus der Formation ersetzt wird, wobei der erste Satz von seismischen Daten vor der Gewinnung des Gases erfasst wird und der zweite Satz von seismischen Daten nach der Gewinnung des Gases erfasst wird.

**13.** Verfahren nach Anspruch 12, wobei der Wert des Grenzwerts B2 in einer Zelle gleich der seismischen Impedanz IP1 der Zelle ist.

**14.** Verfahren nach einem der Ansprüche 12 und 13, wobei auch ein Volumen des geförderten Gases bestimmt wird, indem die folgenden Schritte ausgeführt werden:

Bestimmen einer Porosität der unterirdischen Formation;
- Wählen einer Beziehung zwischen Gassättigung und seismischer Impedanz in der P-Welle als Funktion der Porosität;
- Verknüpfen eines Gassättigungswerts mit jeder Zelle des Würfels durch Anwenden der Beziehung auf die Werte der seismischen Impedanz in der P-Welle nach der Förderung: und
- Bestimmen des Volumens des geförderten Gases durch Summieren aller Gassättigungswerte und durch Gewichten der Summe mit der Porosität und mit einem durch eine Zelle des Würfels eingenommenen Volumen.

**FIG. 1**

**FIG. 2A**

**FIG. 2B**

**FIG. 3A**

**FIG. 3B**

FIG. 4

FIG. 5A                                      FIG. 5B

FIG. 6A                                      FIG. 6B

**FIG. 7**

**FIG. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2765692
- FR 2800473
- FR 2873823
- FR 2933499

**Littérature non-brevet citée dans la description**

- **MARIA HELENA DOMINGUES RAMOS.** Analyse de la pluviométrie sous des systèmes nuageux convectifs - Étude de cas sur des données de la ville de Marseille et de la méthode ISIS de Météo-France. *Thèse, Laboratoire d'étude des Transferts en Hydrologie et Environnement (LTHE, UMR 5564, CNRS, INPG, IRD, UJF,* 2002, 134